Europäisches Patentamt

European Patent Office

Office européen des brevets

(11) Publication number: **0 283 063**
**A1**

# (12) EUROPEAN PATENT APPLICATION

(21) Application number: 88200246.2

(22) Date of filing: **11.02.88**

(51) Int. Cl.⁴: **A22C 11/10 , A22C 11/12**

(30) Priority: **03.03.87 IT 2099387 U**

(43) Date of publication of application:
**21.09.88 Bulletin 88/38**

(84) Designated Contracting States:
**AT BE CH DE ES FR GB GR IT LI LU NL SE**

(71) Applicant: **Righele, Giovanni Battista**
**Via Tiziano, 4**
**I-36010 Zane' (Vicenza)(IT)**

Applicant: **Scorzato, Giuseppe**
**Via Prole, 48**
**I-36035 Marano Vicentino (Vicenza)(IT)**

(72) Inventor: **Righele, Giovanni Battista**
**Via Tiziano, 4**
**I-36010 Zane' (Vicenza)(IT)**
Inventor: **Scorzato, Giuseppe**
**Via Prole, 48**
**I-36035 Marano Vicentino (Vicenza)(IT)**

(74) Representative: **Mittler, Enrico et al**
**c/o Marchi & Mittler-s.r.l. Viale Lombardia, 20**
**I-20131 Milano(IT)**

(54) **Improved tieing machine for bagged products.**

(57) The tieing machine for bagged products comprises a route of travel for an unbroken tube (3) filled with ground meat on which is placed a pair of opening and closing pincers (1 and 2) placed one downstream of the other to constrict the filled tube at regular intervals while a thread spool (9) winds around the constriction at least one turn of thread (13). One of said pincers (1) is fixed while the other (2) moves to form in association with said fixed pincer (1) a common passage of variable cross section area.

The fixed pincer (1) is placed upstream of the moving pincer (2) along the route of travel of the filled tube.

Fig.2

EP 0 283 063 A1

### "Improved tieing machine for bagged products"

The present invention relates to a tieing machine for bagged products.

Automatic and semiautomtic tieing machines for bagged products such as for example sausages which receive a continuous tube full of ground meat and thereon perform in rapid succession the operations of constriction and tieing of the tube to subdivide it into a chain of individual bagged products connected by a short peduncle with a small cross section on which are wound several turns of unbroken tieing thread are known.

The tieing machine comprises a tunnel for conveyance of the filled tube, a thread spool placed at the outlet of said tunnel, a pair of pincers placed downstream from said spool and means for rotating said spool around the axis of said tunnel and actuating the pincers.

Each pincer consists of a plate with a shaped hole which when coupled with the hole of the other plate forms a common passage with variable cross section area through which passes the filled tube to be constricted and tied. For this purposes the pincers are rotated around respective pins to form an open position in which is defined a passage with a large cross section area for the free travel of the filled tube and a closed position in which is formed a passage with small cross section area equal to the cross section area of the resulting peduncle between one bagged product and the next.

In a first type of machine, e.g. the one described in patent application number 21557/83, the moving pincers are both hinged on the fixed part of the machine downstream from the tunnel and the turning spool and the tieing thread is passed upstream from both pincers.

To improve the tieing recourse has been made to a second type of machine wherein the moving pincers are hinged on opposing pins and the thread is passed between the two pincers. The pincer placed upstream has the pin which passes through the thread spool and the tunnel through which passes the filled tube while the downstream pincer is integral with a pin opposed to the abovedescribed pin and both pins are connected to a motion transmission system driven by a drive shaft.

Passage of the upstream pin through the turning spool creates obvious construction problems for this second type of machine.

Considering the known art the object of the present invention is to accomplish a tieing machine for bagged products which would have a particularly simple structure while performing perfect tieing of the bagged product.

In accordance with the invention said object is achieved by providing a tieing machine for bagged products comprising a route of travel for an unbroken tube filled with ground meat, a pair of opening and closing pincers one placed up stream and the other in said route to periodically constrict the filled tube and a thread spool which can be operated while rotating with closed pincers to wrap around the constriction created at least one turn of unbroken tieing thread characterized in that one of said pincers is fixed while the other is moving to form in association with said fixed pincer a common passage with variable cross section area.

The tieing machine comprises means for actuating the moving pincer and means which synchronize the movement thereof to establish the times of opening and closing of the pincers during which the passage of a length of filled tube and the constriction and tieing thereof take place respectively.

Both pincers consist of a plate traversed by a round hole. In addition, to improve the wrapping of the thread around the constriction producted on the filled tube, the hole in the fixed pincer has a side eye centered on the axis of rotation of the thread spool. In this manner the thread which is wrapped round the constriction sweeps a round rather than an oval area so that the tension on the thread is constant and bagging perfect.

One form of accomplishment of the present invention is illustrated as a nonlimiting example in the annexed drawings wherein:

FIG. 1 shows a longitudinal cross section of a tieing machine in accordance with the invention,

FIG. 2 shows a right side view in relation to FIG. 1 of said tieing machine with the pincers open,

FIG. 3 shows a right side view in relation to FIG. 1 of said tieing machine with pincers closed,

FIG. 4 shows a partial schematic cross section of said machine along line IV-IV of FIG. 2, and

FIG. 5 shows a partial schematic cross section of said machine along line V-V of FIG. 3.

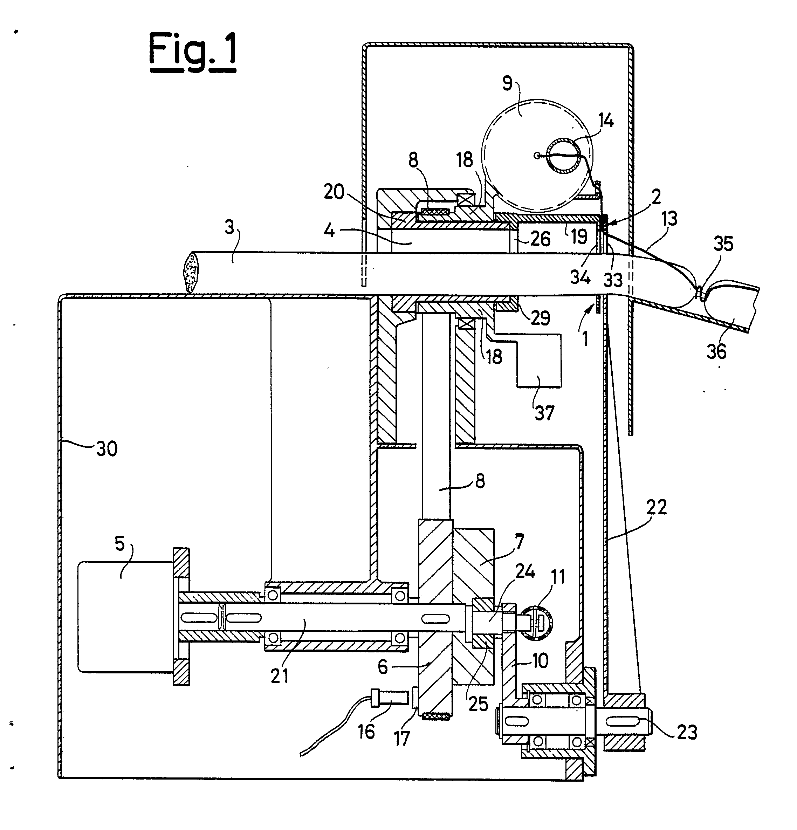

With reference to FIG. 1 there is shown a tieing machine comprising a route of travel for a filled tube 3. Said route comprises a tunnel 4 made inside a tubular sleeve 20 fixed to the frame 30 of the machine. At the outlet of the tunnel 4 there is placed a fixed pincer 1 supported by a support 19 downstream from which is placed a moving pincer 2 supported by an arm 22. The support 19 terminates at the rear in a ring 29 forming the outlet mouth 26 of the tunnel 4, said ring being fixed to the tubular sleeve 20.

The arm 22 of the pincer 2 is fixed to an end of a pin 23 supported with bearings by the tieing machine frame to the other end of which is fixed a crank 10 which works with a cam 7 integral with a pulley 6 driven by a drive shaft 21 of a motor 5.

A spring 11 has one end fixed to the frame 30 of the tieing machine and the other end constrained to the crank 10 to maintain its engagement with the cam 7. At one end of the crank is fixed a hub 24 on which is inserted in a turning manner an idling roller 25 which presses constantly on the cam 7 due to the effect of the spring 11. The cam 7 has a tooth 27 designed to engage with the idling roller 25 and push it away from the axis or rotation of said cam 7 together with the crank 10 opposing the action of the spring 11.

On the pulley 6 is wrapped a belt 8 which cooperates with a sleeve 18 which surrounds in a turning manner the fixed sleeve 20. Said turning sleeve 18 supports a thread spool 9 which delivers a thread 13 passing between the two pincers 1 and 2. To the sleeve 18 is also fixed a counterweight 37.

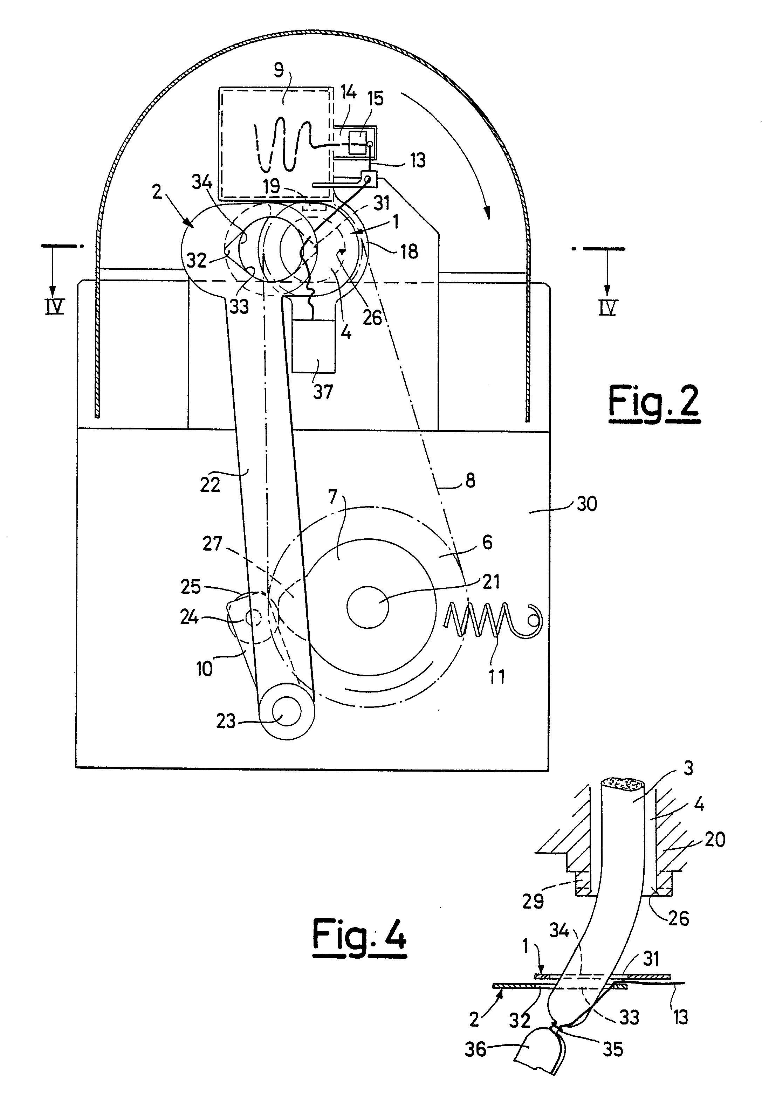

The thread spool 9 has a device for blocking delivery of the thread consisting of a chamber 14 (FIG. 2) in which runs a piston 15 traversed by the thread 13. Said piston 15 at the end of its travel in the chamber presses the thread against the closed end of the chamber and prevents its running. The piston 15 is driven by the centrifugal force produced by the rotation of the thread spool 9.

The machine is also equipped with a sensor 16 which intercepts a reference 17 placed on the pulley 6 at the tooth 27 of the cam 7 each time the pincers are opened, i.e. the idling roller 25 engages the tooth 27. The sensor 16 then emits a signal to stop the motor 5 for all the time necessarty to pass between the pincers the desired length of filled tube 3, after which the motor starts again and the roller 25 abandons the tooth 27 causing the pincers to close.

In FIG. 2 the pincers 1 and 2 are shown in the open position designed to allow passage of a length of filled tube delivered by the output mouth 26 of the tunnel 4. As may be seen the moving pincer 2 is traversed by a round hole 33 with a side eye 32 aligned with a side eye 31 of a similar round hole 34 in the fixed pincer 1, said eye 31 being centered on the axis of the tunnel 4. Said pincers are opened by rotation of only pincer 2 the arm 22 of which is rotated by the pin 23 which in turn is rotated by the crank 10 when the idling roller 25 integral therewith engages the tooth 27 of the rotating cam 7. FIG. 4 shows the position of the pincers in relation to the position of the outlet mouth 26 of the filled tube 3, which is slightly curved.

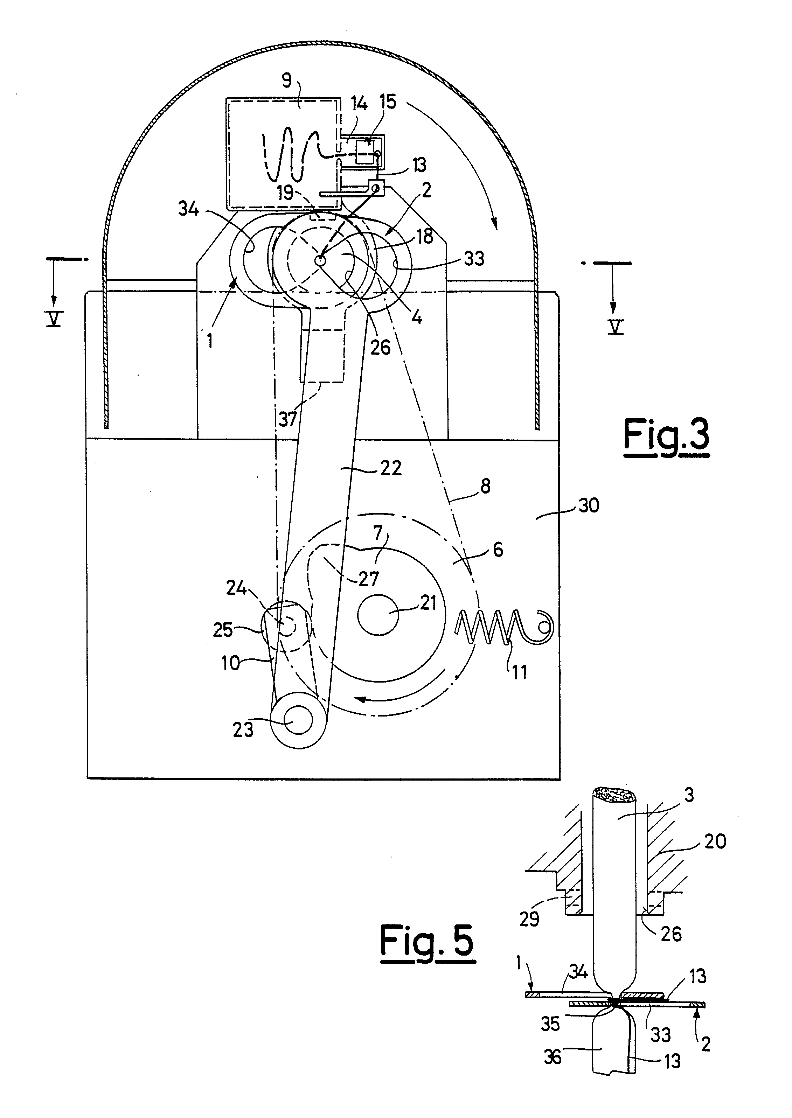

In FIG. 3 is shown the closed position of the pincers 1 and 2, i.e.the position which is obtained when the idling roller 25 is disengaged from the tooth 27 of the cam 7 and in which the eyes 31 and 32 of the pincers are superimposed and centered on the axis of the tunnel 4 and then also on the center of rotation of the spool. During wrapping on the constriction the thread sweeps a circular area and thus maintains constant tension.

The tieing machine described is designed to operate as follows.

At the beginning of a tieing sequence the tieing machine is found as shown in FIGS. 2 and 4 with the pincers open, i.e. with the round holes 33 and 34 aligned with each other, to allow passage of a length of tube to be constricted and tied. The motor 5 is stopped and so remains for a predetermined time while the idling roller 25 of the crank is engaged with the tooth 27 of the cam 7.

Upon transiting of the desired length of filled tube the motor 5 is reactuated and rotates the pulley 6 with the associated cam 7. The roller 25 disengages from the tooth 27, then the crank 10 under the effect of the spring 11 rotates and causes rotation of the pin 23 and the arm 22 of the pincer 2 which closes the tube passage in cooperation with the fixed pincer 1 creating a constriction 35 between one bagged product 36 and the next (FIG. 3).

Simultaneously the pulley - by means of the belt 8 rotates the sleeve 20 on which is supported the spool 9, then the thread passing between the two pincers 1 and 2 winds around the constriction 35 of the tube (FIG. 5). While the pulley 6 is completing a turn and its tooth 27 still engages the roller 25 the spool completes two turns around its own axis of rotation, winding the thread around the constriction 35. Then the tooth 27 by acting on the crank 10 opens the pincers, the motor 5 stops, and the sequence starts over.

## Claims

1. Tieing machine for bagged products comprising a route of travel for an unbroken tube (3) filled with ground meat, a pair of opening and closing pincers (1 and 2) placed one downstream and the other in said route to periodically constrict the filled tube and a thread spool (9) which is rotated with pincers (1 and 2) closed to wrap around the constriction created at least one turn of unbroken tieing thread (13) characterized in that one (1) of said pincers (1, 2) is fixed while the other (2) moves to form in association with said fixed pincer (1) a common passage with variable cross section area.

2. Machine in accordance with claim 1 characterized in that said fixed pincer is the upstream pincer (1).

3. Machine in accordance with claim 1 characterized in that it comprises means (5, 7, 10, 22) of driving the moving pincer (2) and means (16, 27) which synchronize the movement thereof to determine the opening and closing times of said pincers.

4. Machine in accordance with claim 3 characterized in that the means of driving the moving pincer (2) consist of a turning cam (7) driven by a motor (5), said cam (7) engaging with a crank (10) fixed to a first end of a pin (23) the second end of which is integral with an arm (22) which supports said moving pincer (22).

5. Machine in accordance with claim 4 characterized in that the crank (10) is equipped at one end with a hub (24) on which is fitted in a turning manner an idling roller (25) which is held in contact with the cam (7) by a spring (11) having a first end fixed to the crank (10) and the other fixed to the frame (30) of the tieing machine.

6. Machine in accordance with claim 4 characterized in that the means of synchronizing the movement of the moving pincer (22) consist of a tooth (27) provided on the cam (7) and a sensor (16) which intercepts a reference (17) placed on the pulley (6) in a position corresponding to that of the tooth (27).

7. Machine in accordance with claim 1 characterized in that the route of travel of the filled tube (3) consists of a tunnel (4) inside a fixed sleeve (20) the output mouth (26) of which consists of a ring (29) integral with a support (19) which supports the fixed pincer (1).

8. Machine in accordance with any of the preceding claims characterized in that the thread spool (9) is fixed to a turning sleeve (18) which surrounds the fixed sleeve (20), said turning sleeve (18) being rotated by the motor (5) through a motion transmission system.

9. Machine in accordance with claim 1 characterized in that each of said pincers (1, 2) has a round hole (33, 34) with a side eye (31 and 32), the center of the eye (31) of the fixed pincer (1) being placed on the axis of the tunnel (4).

# Fig.1

Fig.2

Fig.4

Fig.3

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-1 557 553 (RIGHELE)<br>* Whole document *<br>--- | 1,8 | A 22 C 11/10<br>A 22 C 11/12 |
| A | CH-A- 170 301 (WIEDERKEHR)<br>* Whole document *<br>--- | 3,4,5 | |
| A | FR-A- 322 839 (PHILIPP)<br>--- | | |
| A | GB-A-1 074 930 (LINKER MACHINES)<br>--- | | |
| A | DE-C- 117 817 (PAULITSCHKE)<br>--- | | |
| A | FR-A-1 045 179 (SCHLACHTER)<br>----- | | |

TECHNICAL FIELDS SEARCHED (Int. Cl.4)

A 22 C

The present search report has been drawn up for all claims

| Place of search | Date of completion of the search | Examiner |
|---|---|---|
| THE HAGUE | 23-06-1988 | DE LAMEILLIEURE D. |

EPO FORM 1503 03.82 (P0401)